(19)

Europäisches
Patentamt

European
Patent Office

Office européen
des brevets

(11) **EP 2 966 792 B1**

(12) **EUROPEAN PATENT SPECIFICATION**

(45) Date of publication and mention
of the grant of the patent:
**16.05.2018 Bulletin 2018/20**

(51) Int Cl.:
**H04B 11/00** *(2006.01)*

(21) Application number: **15172494.5**

(22) Date of filing: **17.06.2015**

(54) **ULTRA-SOUND COMMUNICATION SYSTEM**

ULTRASCHALLKOMMUNIKATIONSSYSTEM

SYSTÈME DE COMMUNICATION À ULTRASONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.01.2016 Bulletin 2016/02**

(73) Proprietor: **NXP B.V.
5656 AG Eindhoven (NL)**

(72) Inventors:
• **VAN BEEK, Jozef**
**Redhill, Surrey RH1 1SH (GB)**
• **SURDEANU, Radu**
**Redhill, Surrey RH1 1SH (GB)**
• **WIDDERSHOVEN, Franciscus**
**Redhill, Surrey RH1 1SH (GB)**
• **GAMAND, Patrice**
**Redhill, Surrey RH1 1SH (GB)**

• **JOS, Rik**
**Redhill, Surrey RH1 1SH (GB)**
• **DAALDEROP, Gerardo**
**Redhill, Surrey RH1 1SH (GB)**
• **RIJNS, Hans**
**Redhill, Surrey RH1 1SH (GB)**

(74) Representative: **Hardingham, Christopher Mark
NXP SEMICONDUCTORS
Intellectual Property Group
Abbey House
25 Clarendon Road
Redhill, Surrey RH1 1QZ (GB)**

(56) References cited:
**EP-A1- 2 271 134       WO-A1-00/21203
US-A1- 2011 141 853    US-A1- 2012 044 786
US-A1- 2014 108 780**

**Description**

**BACKGROUND**

Explosive growth, overwhelming popularity and mass adoption of the Internet and mobile devices (e.g., smart phones, tablet computers, etc.) have opened up new frontiers for developing new usage of these devices far above and beyond their tradition use, that is, for person to person voice communication and the Internet browsing. Many new usage of mobile devices have come up recently. One of them is for making secure payments as a replacement for carrying charge cards. One of the popular technologies that enables the use of mobile device for secure payments is Near Field Communication (NFC).

NFC is a short-range wireless communication technology that provides for the exchange of data between devices distances typically up to about 20 cm. NFC technology is typically based on RFID, and works by magnetic field induction using relatively low data rates (specified speeds are 106 kbit/s, 212 kbit/s and 424 kbit/s). NFC technology is primarily used with mobile phones, and can be used to provide services such as: card emulation, in which the NFC-enabled device behaves like an existing contactless card; RFID reader, in which the NFC-enabled device is active and reads a passive RFID tag, for example for interactive advertising; and communications mode, in which two NFC-enabled devices exchange information.

NFC and Bluetooth are both short-range communication technologies which have recently been integrated into mobile devices. The significant advantage of NFC over Bluetooth is the shorter set-up time. Instead of performing manual configurations to identify Bluetooth devices, the connection between two NFC-enabled devices is established immediately (<0.1 s). To avoid the complicated configuration process, NFC can be used to set up the Bluetooth link.

NFC that uses RFID technology, however requires additional hardware to be placed in mobile phones. The efforts are on to find ways to provide near field secure communication using technologies that are cheaper and easy to implement in new and existing devices. NFC technologies based on sound waves have been employed in device to device communication, especial to implement secure payment methods.

WO00/21203 describes a method of communicating with an electronic device. The method comprises: providing a computer having an audible sound receiving and generating sub-system including a microphone; transmitting from a source at least one ultrasonic acoustic signal, encoded with information to the computer; and receiving the at least one signal by said microphone, to be detected by the computer.

US2014/108780 describes a method for communicating messages by a mobile device via a sound medium. The mobile device receives input sounds from at least one mobile device via the sound medium. From the input sounds, an input sound signal carrying a first message encoded with a first key is detected. The mobile device decodes the first message based on a matching key. An output sound signal carrying a second message encoded with a second key is generated. Further, the mobile device transmits an output sound corresponding to the output sound signal via the sound medium.

**SUMMARY**

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to an aspect of the invention, there is provided a device, comprising:

a plurality of microphones to receive ultra-sound signals that include encoded data; and

a processor coupled to the plurality of microphones,

wherein the processor is configurable to detect the ultra-sound signals through the plurality of microphones,

wherein the detection includes calculating an angle of arrival of the ultra-sound signals at a microphone in the plurality of microphones,

wherein the processor is further configurable to disregard the ultra-sound signals if the measured angle of arrival is outside a preset threshold range, and

wherein the processor is configurable to perform a transaction based on the encoded data received via a microphone in the plurality of microphones.

According to another aspect of the invention, there is provided a device connectable to a network, the device comprising:

a processor;

a memory, wherein the memory includes programming instructions to configure a mobile device when the programming instructions are transferred, via the network, to the mobile device and executed by a processor of the mobile device, wherein after being configured through the transferred programming instructions, the mobile device performs an operation, the operation includes:

detecting ultra-sound signals through a plurality of microphones incorporated in the mobile device, wherein the detecting includes calculating an angle of arrival of the ultra-sound signals at a microphone in the plurality of microphones;

disregarding the ultra-sound signals if the measured angle of arrival is outside a preset threshold range, and

performing a transaction based on the encoded data received via a microphone in the plurality of microphones.

In one embodiment, a device includes a plurality of microphones to receive ultra-sound signals that include encoded data and a microcontroller coupled to the plurality of microphones, the microcontroller is configured to detect the ultra-sound signals through the plurality of microphones. The detection includes calculating an angle of arrival of the ultra-sound signals at a microphone in the plurality of microphones, wherein the microcontroller is configured to perform a transaction based on the encoded data received via a microphone in the plurality of microphones. The device is further configured to disregard the ultra-sound signals if the measured angle of arrival is outside a preset threshold range.

The device may also be configured to measure a distance to a source of the ultra-sound signals and to disregard the ultra-sound signals if the measured distance is greater than a preset threshold. In addition, in some embodiments, the device is further configured to perform a secret code exchange with a sender of the ultra-sound signals and to encrypt data sent to the sender using the secret code.

## BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:

FIG. 1 depicts a device sending data using sound signals;

FIG. 2 illustrates sound signals, originating at a same time from a transmitter, arriving at different times at different microphones of a device;

FIG. 3 illustrates calculating angle and distance from a transmitter in accordance with one aspect of the present disclosure;

FIG. 4 illustrates preset angular and radial threshold of sound signals;

FIG. 5 is a block diagram illustrating an example hardware device in which the subject matter may be implemented; and

FIG. 6 is a schematic of a system for storing downloadable applications on a server that is connected to a network.

## DETAILED DESCRIPTION

Mobile devices such as smart phones are being routinely used for business applications as for example, a mobile phone with a built-in RFID device and supporting software may be used for making payments to vendors. For example, at a convenience store, a user may simply bring his/her mobile phone close to a payment terminal to initiate a charge transaction. These applications provide better security than carrying or using credit cards or charge cards because unlike a credit or charge card that allow a bearer to perform a charge transaction, a charge transaction using a mobile phone can only be performed by an authorized user. In addition, such applications provide better usability and convenience to the users.

On the downside, however, implementing these applications typically require additional hardware as for example, a mobile phone without a RFID may not be used for making secure payments using a traditional NFC mechanism. Furthermore, RFID based NFC applications pose at least some security risks because a malicious device may present itself as a payment terminal and initiate a charge transaction. For example, NFC based charge terminals are being used at some train stations to allow commuters to simply bring their phones near a terminal to pay and open the entry gate to the train station. In this example, a malicious device may be placed near to the charge terminal to initiate a fraudulent charge. The malicious device may use higher strength signals to make it appear close to the mobile phone.

Using ultra-sound instead of electromagnetic signals to transmit data provides advantages because unlike electromagnetic signals, ultra-sound signals are less durable in the air (i.e., cannot travel great distances) and cannot penetrate through higher density matters. Ultra-sound signals are directional in nature, hence the two devices participating in a charge transaction (for example) need to be in direct line of sight without any obstruction in between. However, a risk remains because a malicious device, even though not facing directly to a user's device, may still be able to communicate from an angular physical location.

The methods and systems described herein provide a communication link security to enable the use of ultra-sound in secure NFC applications. To prevent devices from communicating with a user's device from an angular position, systems and methods are described herein to calculate an angle of sound transmission and if the angle is found to be outside a predefined angular threshold, the communication may be cutoff or considered not suitable for a secure transaction. In addition, the embodiments described herein determine the distance between the devices using ultra-sound signals and if the distance is not found within a preset radial threshold, the mobile device may be configured to reject the communication from a second device.

Ultra-sound transmission is directional in nature and radially confined due to fast absorption of waves in the air. Ultra-sound waves feature low propagation velocity (v) and high attenuation. The attenuation increases with the increase in frequency.

$$\text{Attenuation (dB)} = \text{ frequency } (f) \text{ (MHz) x path length (cm)}$$

Propagation Velocity is the speed that sound waves propagate through a medium and depends on medium density and compressibility. The relationship between these variables is expressed by the Wave Equation : $v = \lambda f$

Wavelength ($\lambda$) is the distance between two areas of maximal compression (or rarefaction). Ultra-sound waves typically have a small wavelength of approximately $\lambda=7$ millimeters at f=50kHz, which translates into Ultra-sound waves having a much lower propagation speed compared to electromagnetic signals (that features substantially high wavelengths at similar frequencies). Due to the low frequencies and associated small bandwidths, ultra-sound signals are not suitable for high speed data transmission. However, in the present disclosure, data transmission speed is less of a concern because the present disclosure leverages on these very physical characteristics of ultra-sound waves to provide a secure communication between devices.

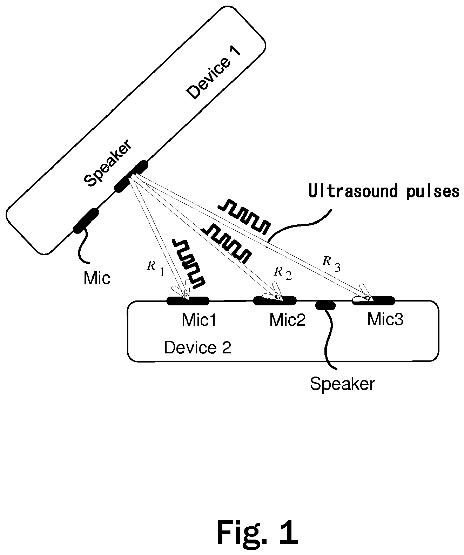

Moving to Figure 1 that illustrates two devices having speakers and microphones communicating with each other through ultra-sound signals. In one example, Device 1 could be a Point-of-Sale (POS) terminal and Device 2 could be a mobile phone. Device 2 includes a plurality of microphones and at least one speaker.

Device 1 and Device 2 may encode data in ultra-sound signals to exchange data relating to a transaction. In one example, Device 1 may send amount to be paid and Device 2 may send credit card information back to Device 1. Device 1 can then process the credit card information via an external service via the Internet and may provide a result of the credit card processing to Device 2 and/or to the operator of Device 1.

A security issue arises when a third device (not shown) is in the vicinity and configured to snoop the data communication between Device 1 and Device 2. To prevent the third device from deciphering the data being exchanged between Device 1 and Device 2, Device 1 and Device 2 are configured to use data one of many encryption mechanisms such as public-private keys to encrypt and decrypt data. In one example, a shared key is securely exchanged in such a way that only Device 1 and Device 2 can decipher the shared key. Device 1 and Device 2 then use that shared key to encrypt and decrypt data. In another example, Device 1 and Device 2 exchange their public keys with each other and use other device's public key to encrypt data being sent and their own private keys to decrypt received data. The data encrypted using Device 1's public key can only be decrypted using Device 1's private key and the same with Device 2. This way, the third device remains unable to intelligently understand the communication between Device 1 and Device 2.

However, there is another security aspect that this encryption cannot handle. At the time Device 2 begins to complete the transaction, suppose the third device poses as Device 1 before Device 1 can act. For example, Device 2 begins to pay for a train ticket at a train station using a wireless payment method which includes simply bringing Device 2 close to a POS terminal. Before the POS terminal activates, a third device, that is places in the vicinity of the POS terminal, sends a request to Device 2 to initiate a payment. Device 2 may continue to believe that it is communicating with the POS terminal (Device 1 in Figure 1) and reveal credit card information to the third device. The present disclosure addresses such security risks in contact less transaction processing.

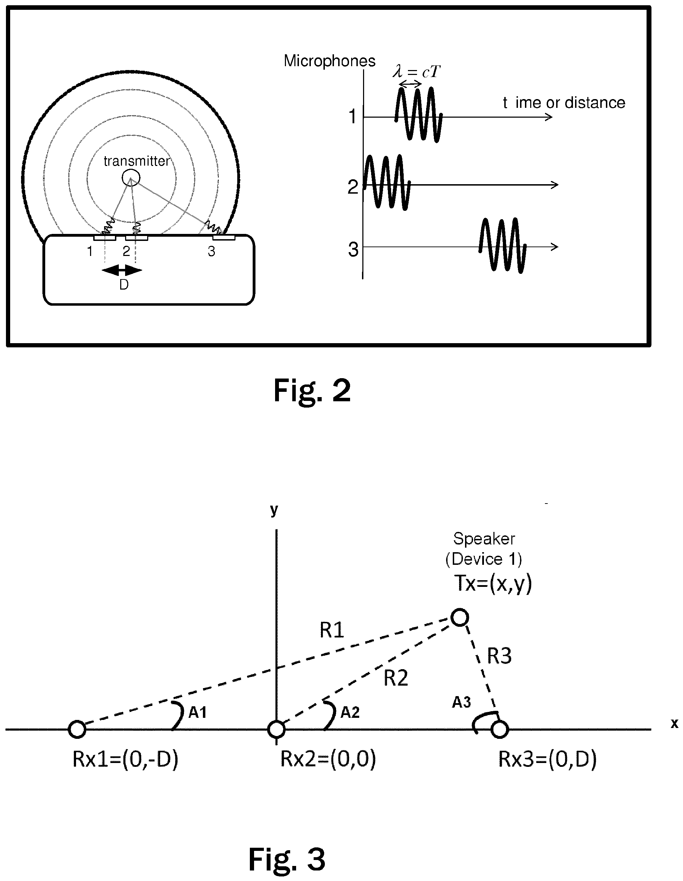

Moving to Figure 2 that illustrates that when Device 1 send data encoded in ultra-sound signals, the signals arrive at different times at different microphones that are incorporated at known distance to each other in Device 2. Using known speed of ultra-sound and distance between microphones, it is possible to calculate the distance to the transmitter (incorporated in Device 1 in this example) and an angle of arrival of ultra-sound waves at different microphones.

Typical audio speakers and microphones are capable of producing and detecting ultrasound signals up to frequencies of approximately 40-80 KHz corresponding to wavelengths down to 8.5-4.3mm. Beyond these frequencies these microphones and speakers get somewhat inefficient. To improve efficiency and accuracy of detection, dedicated ultrasound transducers may be used. In one example, for measuring the angle of arrival of ultrasound waves or measuring distance to the transmitter, it is beneficial to use highest possible frequency in the ultrasound spectrum. Higher frequency results in smaller wavelength that in turn increases resolution. Dedicated transducers may yield a frequency range above 100 KHz. Audio speakers and microphones may be improved to provide a operational frequency above 50 KHz. In one example, the distance resolution is approximately $\Delta R_{min}=\lambda/2$ therefore the minimum spacing (D) between two microphones should be approximately equal to or greater than $\lambda/2$ in order to measure an angle of arrival. Sufficient resolution is achieved in the 40-80kHz range when D is a couple of centimeters, thereby easily fitting a mobile phone. It should be noted that for electromagnetic waves up to several GHz, as for example, used in Bluetooth, GSM, or LTE, D typically measures several meters due to the much higher propagation speed and associated large wavelength of EM waves. The large value of D makes angle of arrival measurements impractical for use in small handheld devices in case EM waves up to several GHz are used.

Figure 3 illustrates an example of calculating the angle of arrival of ultrasound signals at one or more microphones. Figure 3 depicts a line array consisting of three microphones Rx1, Rx2, and Rx3. For the purpose of easy understanding, in this example, it is assumed that the distance between any two adjacent microphones is $D$. In other examples, the distances between two adjacent microphones may be different. In this example, Rx1 is located at coordinates (0, -D), Rx2 at (0,0) and Rx3 at (0,D). The microphones receive a ultrasound signal from a speaker Tx located at coordinates (x,y). Transmitter Tx's distance to microphones Rx1, Rx2, Rx3 is $R_1$, $R_2$, and $R_3$, respectively.

When a pulse is transmitted from transmitter Tx, the pulse is received by microphones Rx1, Rx2 and Rx3 at different times $T_1$, $T_2$, and $T_3$. The processor of Device 2 records times $T_1$, $T_2$, and $T_3$ when incoming ultrasound pulses are received at receivers/microphones Mic1, Mic2 and Mic3 respectively. From the recorded time of arrival of the ultrasound pulse at different microphones, Device 2 can then calculate $\Delta T_{12}$, $\Delta T_{13}$, and $\Delta T_{23}$. The timing difference is proportional to the difference in $R_1$, $R_2$ and $R_3$ respectively. The timing delay of the pulse received at Rx1 and Rx2 can be represented by EQ 1.

$$\Delta T_{12} = T_1 - T_2 = \frac{R_1 - R_2}{c} = \frac{\Delta R_{12}}{c} \qquad\qquad (EQ\ 1)$$

In EQ 1, c is the speed of sound, which is known in the present example. The delay $\Delta T_{23}$ for Rx2-Rx3 and the delay $\Delta T_{13}$ for Rx1-Rx3 may be represented the following equations.

$$\Delta T_{23} = \frac{\Delta R_{23}}{c}$$

$$\Delta T_{13} = \frac{\Delta R_{13}}{c}$$

The three delays are all related to the same location (x,y) of transmitter Tx. Following distances can be calculated using the following equations:

$$\Delta R_{12} = \frac{(x+D)^2 - x^2}{\sqrt{(x+D)^2 + y^2} + \sqrt{x^2 + y^2}}$$

(EQ 2)

$$\Delta R_{23} = \frac{x^2 - (x-D)^2}{\sqrt{x^2 + y^2} + \sqrt{(x-D)^2 + y^2}}$$

(EQ 3)

$$\Delta R_{13} = \frac{(x+D)^2 - (x-D)^2}{\sqrt{(x+D)^2 + y^2} + \sqrt{(x-D)^2 + y^2}}$$

(EQ 4)

A person skilled in the art would appreciate that measuring two out of the three delays $\Delta R_{12}$, $\Delta R_{23}$, $\Delta R_{13}$ would allow calculating coordinates transmitter Tx's coordinates (x,y). Further, once the coordinates (x, y) are known, one or more of angles A1, A2 and A3 may also be calculated.

The resolution at which $\Delta R$ can be measured is dependent on the wavelength of the wavelet or pulses that is being transmitted by transmitter Tx. In one example, the minimum delay $\Delta R_{min}$ that can be detected is approximately equal to half a wavelength and dependent on the frequency of the sound wave (EQ 5).

$$\Delta R_{min} \approx \frac{c}{2f}$$

(EQ 5)

The maximum delay, $\Delta R_{max}$ occurs when Tx is in-line with microphones Rx1, Rx2 and Rx3. Therefore, the delay is equal to *D* for two adjacent mics Rx1-Rx2 and Rx2-RX3. The delay would be *2D* in case the delay is measured between Rx1-Rx3.

In one embodiment, to reduce errors, multiple measurements may be taken and statistical methods may be used to determine values from plurality of measurements of distances R1, R2 and R3. From multiple measurements, it can be observed that the angular resolution is more or less constant but the radial resolution deteriorates with radial distance. In one example, a radial resolution of less than a centimeter is obtained when the radial distance is smaller than 5cm. For a radial distance of 10cm the resolution is about 5cm. Both radial and angular resolution can be improved further by choosing a higher sound frequency and/or making the array larger (i.e., increasing D).

It should be noted that the logic to detect ultrasound pulses and perform above calculations may be embodied in software or hardware. If embodied in software, these calculations may be performed by an application processor of Device 2. This calculation logic may also be embodied in hardware. In one example, a microcontroller of Device 2 may include the angle and distance calculation logic according to the methods described above.

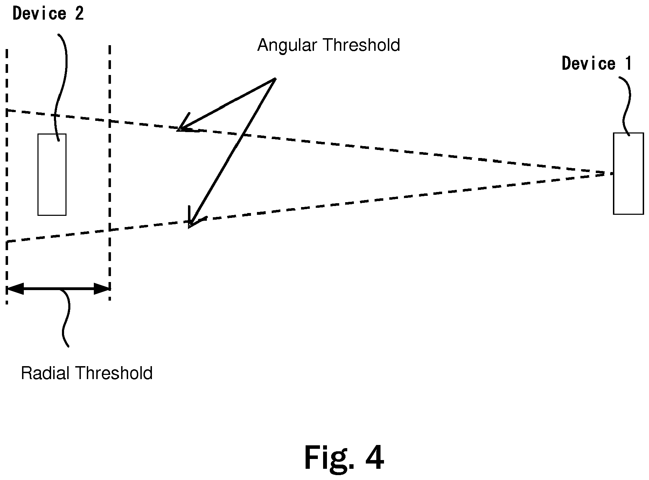

Figure 4 illustrates angular and radial threshold. It should be noted that in addition to calculating the angle and distance as described above, Device 2 may also be configured to disregard communication from a second device if the calculated angle does not fall with a preset or configurable angular threshold. In addition, Device 2 may be configured to disregard a communication from a second device if the measured distance is not within a preset or configurable radian threshold. Rejecting communication from external devices based on these thresholds ensures that Device 2 only engage in a transaction with another device when another device the intended device to communicate with. The intended device is most likely be the intended POS terminal and a communication between Device 2 and the intended POS terminal will take place only when Device 2 is brought very close to the POS terminal with the microphones of Device 2 directly facing the POS terminal.

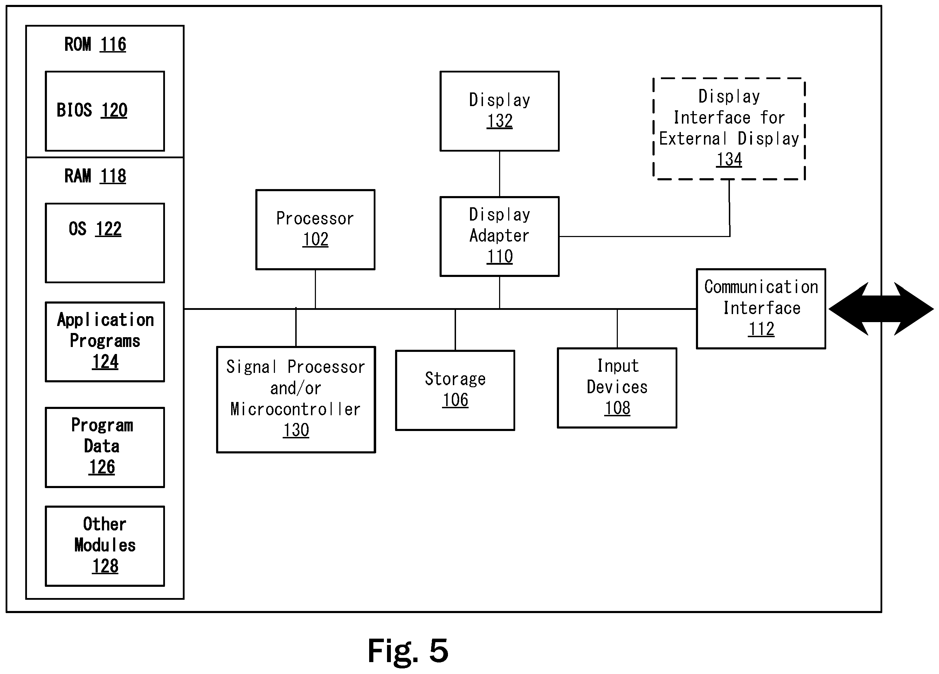

Figure 5 illustrates a hardware device in which the subject matter may be implemented. Those of ordinary skill in the art will appreciate that the elements illustrated in FIG. 1 may vary depending on the system implementation (e.g., a mobile device, a tablet computer, laptop computer, etc.). With reference to FIG. 5, an exemplary system for implementing the subject matter disclosed herein includes a hardware device 100, including a processing unit 102, memory 104, storage 106, data entry module 108, display adapter 110, communication interface 112, and a bus 114 that couples elements 104 - 112 to the processing unit 102.

The bus 114 may comprise any type of bus architecture. Examples include a memory bus, a peripheral bus, a local bus, etc. The processing unit 102 is an instruction execution machine, apparatus, or device and may comprise a microprocessor, a digital signal processor, a graphics processing unit, an application specific integrated circuit (ASIC), a field programmable gate array (FPGA), etc. The processing unit 102 may be configured to execute program instructions stored in memory 104 and/or storage 106 and/or received via data entry module 108.

The memory 104 may include read only memory (ROM) 116 and random access memory (RAM) 118. Memory 104 may be configured to store program instructions and data during operation of device 100. In various embodiments, memory 104 may include any of a variety of memory technologies such as static random access memory (SRAM) or dynamic RAM (DRAM), including variants such as dual data rate synchronous DRAM (DDR SDRAM), error correcting code synchronous DRAM (ECC SDRAM), or RAMBUS DRAM (RDRAM), for example. Memory 104 may also include nonvolatile memory technologies such as nonvolatile flash RAM (NVRAM) or ROM. In some embodiments, it is contemplated that memory 104 may include a combination of technologies such as the foregoing, as well as other technologies not specifically mentioned. When the subject matter is implemented in a computer system, a basic input/output system (BIOS) 120, containing the basic routines that help to transfer information between elements within the computer system, such as during start-up, is stored in ROM 116.

The storage 106 may include a flash memory data storage device for reading from and writing to flash memory, a hard disk drive for reading from and writing to a hard disk, a magnetic disk drive for reading from or writing to a removable magnetic disk, and/or an optical disk drive for reading from or writing to a removable optical disk such as a CD ROM, DVD or other optical media. The drives and their associated computer-readable media provide nonvolatile storage of computer readable instructions, data structures, program modules and other data for the hardware device 100.

It is noted that the methods described herein can be embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media may be used which can store data that is accessible by a computer, such as magnetic cassettes, flash memory cards, digital video disks, Bernoulli cartridges, RAM, ROM, and the like may also be used in the exemplary operating environment. As used here, a "computer-readable medium" can include one or more of any suitable media for storing the executable instructions of a computer program in one or more of an electronic, magnetic, optical, and electromagnetic format, such that the instruction execution machine, system, apparatus, or device can read (or fetch) the instructions from the computer readable medium and execute the instructions for carrying out the described methods. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD™), a BLU-RAY disc; and the like.

A number of program modules may be stored on the storage 106, ROM 116 or RAM 118, including an operating system 122, one or more applications programs 124, program data 126, and other program modules 128. A user may enter commands and information into the hardware device 100 through data entry module 108. Data entry module 108 may include mechanisms such as a keyboard, a touch screen, a pointing device, etc. Device 100 may include a signal processor and/or a microcontroller to perform various signal processing and computing tasks such as executing programming instructions to detect ultrasound signals and perform angle/distance calculations, as described above. By way of example and not limitation, external input devices may include one or more microphones, joystick, game pad, scanner, or the like. In some embodiments, external input devices may include video or audio input devices such as a video camera, a still camera, etc. Input device port(s) 108 may be configured to receive input from one or more input devices of device 100 and to deliver such inputted data to processing unit 102 and/or signal processor 130 and/or memory 104 via bus 114.

Optionally, a display 132 is also connected to the bus 114 via display adapter 110. Display 132 may be configured to display output of device 100 to one or more users. In some embodiments, a given device such as a touch screen, for example, may function as both data entry module 108 and display 132. External display devices may also be connected to the bus 114 via optional external display interface 134. Other peripheral output devices, not shown, such as speakers and printers, may be connected to the hardware device 100.

The hardware device 100 may operate in a networked environment using logical connections to one or more remote nodes (not shown) via communication interface 112. The remote node may be another computer, a server, a router, a peer device or other common network node, and typically includes many or all of the elements described above relative to the hardware device 100. The communication interface 112 may interface with a wireless network and/or a wired network. Examples of wireless networks include, for example, a BLUETOOTH network, a wireless personal area network, a wireless 802.11 local area network (LAN), and/or wireless telephony network (e.g., a cellular, PCS, or GSM network). Examples of wired networks include, for example, a LAN, a fiber optic network, a wired personal area network, a telephony network, and/or a wide area network (WAN). Such networking environments are commonplace in intranets, the Internet, offices, enterprise-wide computer networks and the like. In some embodiments, communication interface 112 may include logic configured to support direct memory access (DMA) transfers between memory 104 and other devices.

In a networked environment, program modules depicted relative to the hardware device 100, or portions thereof, may be stored in a remote storage device, such as, for example, on a server. It will be appreciated that other hardware and/or software to establish a communications link between the hardware device 100 and other devices may be used.

It should be understood that the arrangement of hardware device 100 illustrated in FIG. 5 is but one possible implementation and that other arrangements are possible. It should also be understood that the various system components (and means) defined by the claims, described below, and illustrated in the various block diagrams represent logical components that are configured to perform the functionality described herein. For example, one or more of these system components (and means) can be realized, in whole or in part, by at least some of the components illustrated in the arrangement of hardware device 100. In addition, while at least one of these components are implemented at least partially as an electronic hardware component, and therefore constitutes a machine, the other components may be implemented in software, hardware, or a combination of software and hardware. More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function), such as those illustrated in FIG. 5. Other components may be implemented in software, hardware, or a combination of software and hardware. Moreover, some or all of these other components may be combined, some may be omitted altogether, and additional components can be added while still achieving the functionality described herein. Thus, the subject matter described herein can be embodied in many different variations, and all such variations are contemplated to be within the scope of what is claimed.

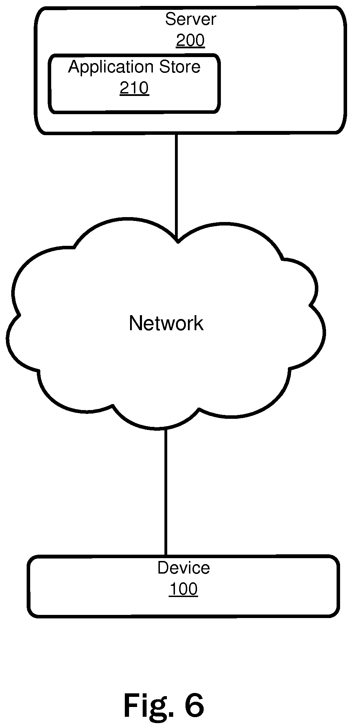

Figure 6 illustrates a server 200 that includes a memory 210 for storing applications. The server 200 is coupled to a network. In one embodiment, the internal architecture of the server 200 may resemble the hardware device depicted in Figure 5. The memory 210 includes an application that includes programming instructions which when downloaded to Device 100 and executed by a processor of Device 100, performs detection of ultrasound signals received at a plurality of microphones of Device 100. The programming instructions also cause the processor of Device 100 to perform angle and/or distance calculations as described above. After downloading the programming instructions from the server 200 via the network, Device 100 is configured to perform the detection and angle/distance calculations. The programming instructions also configures Device 100 to process transactions according to angular/radial thresholds, as described in Figure 4.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

**Claims**

**1.** A device (100), comprising:

a plurality of microphones to receive ultra-sound signals that include encoded data; and
a processor (102, 130) coupled to the plurality of microphones,
wherein the processor is configurable to detect the ultra-sound signals through the plurality of microphones,
wherein the detection includes calculating an angle of arrival of the ultra-sound signals at a microphone in the plurality of microphones,
wherein the processor is further configurable to disregard the ultra-sound signals if the measured angle of arrival is outside a preset threshold range, and
wherein the processor is configurable to perform a transaction based on the encoded data received via a microphone in the plurality of microphones.

2. The device of claim 1, wherein the processor is further configurable to measure a distance to a source of the ultra-sound signals.

3. The device of claim 2, wherein the processor is further configurable to disregard the ultra-sound signals if the measured distance is greater or smaller than a preset threshold.

4. The device of any preceding claim, wherein the processor is further configurable to perform a secret code exchange with a sender of the ultra-sound signals.

5. The device of claim 4, wherein the processor is configurable to encrypt data sent to the sender using the secret code.

6. A device according to any preceding claim, wherein the configurable processor is a configured microcontroller (130).

7. The device of any preceding claim, wherein the device is a mobile phone.

8. A device connectable to a network, the device comprising:

a processor;
a memory, wherein the memory includes programming instructions to configure a mobile device when the programming instructions are transferred, via the network, to the mobile device (100) and executed by a processor of the mobile device, wherein after being configured through the transferred programming instructions, the mobile device performs an operation, the operation includes:

detecting ultra-sound signals through a plurality of microphones incorporated in the mobile device, wherein the detecting includes calculating an angle of arrival of the ultra-sound signals at a microphone in the plurality of microphones;
disregarding the ultra-sound signals if the measured angle of arrival is outside a preset threshold range, and performing a transaction based on the encoded data received via a microphone in the plurality of microphones.

9. The device of claim 8, wherein the operation further includes measuring a distance to a source of the ultra-sound signals.

10. The device of claim 9, wherein the operation further includes disregarding the ultra-sound signals if the measured distance is greater or smaller than a preset threshold.

11. The device of any of claims 8 to 10, wherein the operation further includes performing a secret code exchange with a sender of the ultra-sound signals.

12. The device of claim 11, wherein the operation further includes encrypting data sent to the sender using the secret code.


**Patentansprüche**

1. Eine Vorrichtung (100), aufweisend:

eine Vielzahl von Mikrofonen, um Ultraschall Signale zu empfangen, welche kodierte Daten beinhalten; und
einen Prozessor (102, 130), der mit der Vielzahl von Mikrofonen gekoppelt ist,
wobei der Prozessor konfigurierbar ist Ultraschall Signale durch die Vielzahl von Mikrofonen zu detektieren,
wobei das Detektieren beinhaltet zu berechnen einen Eintreffwinkel der Ultraschall Signale an einem Mikrofon in der Vielzahl von Mikrofonen,
wobei der Prozessor ferner konfigurierbar ist die Ultraschall Signale nicht zu berücksichtigen, wenn der gemessene Eintreffwinkel außerhalb eines vorgegebenen Schwellenbereichs ist, und
wobei der Prozessor konfigurierbar ist durchzuführen einen Vorgang basierend auf den kodierten Daten, die über ein Mikrofon in der Vielzahl von Mikrofonen empfangen werden.

2. Die Vorrichtung gemäß Anspruch 1, wobei der Prozessor ferner konfigurierbar ist eine Entfernung zu messen zu einer Quelle der Ultraschall Signale.

3. Die Vorrichtung gemäß Anspruch 2, wobei der Prozessor ferner konfigurierbar ist nicht zu berücksichtigen die Ultraschall Signale, wenn die gemessene Entfernung größer oder kleiner als ein vorgegebener Schwellwert ist.

4. Die Vorrichtung gemäß irgendeinem vorherigen Anspruch, wobei der Prozessor ferner konfigurierbar ist einen geheimen Code Austausch mit einem Sender der Ultraschall Signale durchzuführen.

5. Die Vorrichtung gemäß Anspruch 4, wobei der Prozessor konfigurierbar ist Daten zu verschlüsseln, die zu dem Sender gesendet werden, unter Verwenden des geheimen Codes.

6. Eine Vorrichtung gemäß irgendeinem vorherigen Anspruch, wobei der konfigurierbare Prozessor ein konfigurierter Mikrocontroller (130) ist.

7. Die Vorrichtung gemäß irgendeinem vorherigen Anspruch, wobei die Vorrichtung ein Mobiltelefon ist.

8. Eine Vorrichtung, die mit einem Netzwerk verbindbar ist, wobei die Vorrichtung aufweist:

einen Prozessor;
einen Speicher, wobei der Speicher beinhaltet Programmieranweisungen, um eine mobile Vorrichtung zu konfigurieren, wenn die Programmieranweisungen übertragen werden über das Netzwerk an die mobile Vorrichtung (100) und ausgeführt werden von einem Prozessor der mobilen Vorrichtung, wobei, nachdem sie durch die übertragenen Programmieranweisungen konfiguriert wurde, die mobile Vorrichtung einen Arbeitsablauf durchführt, wobei der Arbeitsablauf beinhaltet:

Detektieren von Ultraschall Signalen durch eine Vielzahl von Mikrofonen, die in der mobilen Vorrichtung integriert sind, wobei das Detektieren beinhaltet zu berechnen einen Eintreffwinkel der Ultraschall Signale an einem Mikrofon in der Vielzahl von Mikrofonen;
Nicht-Berücksichtigen der Ultraschall Signale, wenn der gemessene Eintreffwinkel außerhalb eines vorgegebenen Schwellenbereichs liegt, und
Ausführen eines Vorgangs basierend auf den kodierten Daten, die über ein Mikrofon in der Vielzahl von Mikrofonen empfangen werden.

9. Die Vorrichtung gemäß Anspruch 8, wobei der Arbeitsablauf ferner beinhaltet eine Entfernung zu messen zu einer Quelle der Ultraschall Signale.

10. Die Vorrichtung gemäß Anspruch 9, wobei der Arbeitsablauf ferner beinhaltet die Ultraschall Signale nicht zu berücksichtigen, wenn die gemessene Entfernung größer oder kleiner als ein vorgegebener Schwellwert ist.

11. Die Vorrichtung gemäß irgendeinem der Ansprüche 8 bis 10, wobei der Arbeitsablauf ferner beinhaltet einen geheimen Code Austausch mit einem Sender der Ultraschall Signale.

12. Die Vorrichtung gemäß Anspruch 11, wobei der Arbeitsablauf ferner beinhaltet Daten zu verschlüsseln, die zu dem Sender gesendet werden, unter Verwenden des geheimen Codes.

**Revendications**

1. Dispositif (100), comprenant :

une pluralité de microphones pour recevoir des signaux ultrasonores qui incluent des données codées, et
un processeur (102, 130) couplé à la pluralité de microphones,
le processeur étant configurable pour détecter les signaux ultrasonores par l'intermédiaire de la pluralité de microphones,
la détection incluant le calcul d'un angle d'arrivée des signaux ultrasonores au niveau d'un microphone dans la pluralité de microphones,

le processeur étant en outre configurable pour ne pas tenir compte des signaux ultrasonores si l'angle d'arrivée mesuré est en dehors d'une plage seuil prédéfinie, et

le processeur étant configurable pour exécuter une transaction en fonction des données codées reçues via un microphone dans la pluralité de microphones.

2. Dispositif selon la revendication 1, dans lequel le processeur est en outre configurable pour mesurer une distance par rapport à une source des signaux ultrasonores.

3. Dispositif selon la revendication 2, dans lequel le processeur est en outre configurable pour ne pas tenir compte des signaux ultrasonores si la distance mesurée est supérieure ou inférieure à un seuil prédéfini.

4. Dispositif selon l'une quelconque des revendications précédentes, dans lequel le processeur est en outre configurable pour exécuter un échange de code secret avec un émetteur des signaux ultrasonores.

5. Dispositif selon la revendication 4, dans lequel le processeur est configurable pour chiffrer des données envoyées à l'émetteur à l'aide du code secret.

6. Dispositif selon l'une quelconque des revendications précédentes, dans lequel le processeur configurable est un microcontrôleur configuré (130).

7. Dispositif selon l'une quelconque des revendications précédentes, dans lequel le dispositif est un téléphone mobile.

8. Dispositif connectable à un réseau, le dispositif comprenant :

un processeur ;

une mémoire, laquelle mémoire comprend des instructions de programmation pour configurer un dispositif mobile lorsque les instructions de programmation sont transférées, via le réseau, au dispositif mobile (100) et exécutées par un processeur du dispositif mobile, où, après avoir été configuré par les instructions de programmation transférées, le dispositif mobile exécute une opération, laquelle opération inclut les étapes consistant à :

détecter des signaux ultrasonores par l'intermédiaire d'une pluralité de microphones incorporés dans le dispositif mobile, laquelle détection inclut le calcul d'un angle d'arrivée des signaux ultrasonores au niveau d'un microphone dans la pluralité de microphones,

ne pas tenir compte des signaux ultrasonores si l'angle d'arrivée mesuré est en dehors d'une plage seuil prédéfinie, et

exécuter une transaction en fonction des données codées reçues via un microphone dans la pluralité de microphones.

9. Dispositif selon la revendication 8, dans lequel l'opération inclut en outre la mesure d'une distance jusqu'à une source des signaux ultrasonores.

10. Dispositif selon la revendication 9, dans lequel l'opération inclut en outre le fait de ne pas tenir compte des signaux ultrasonores si la distance mesurée est supérieure ou inférieure à un seuil prédéfini.

11. Dispositif selon l'une quelconque des revendications 8 à 10, dans lequel l'opération inclut en outre l'exécution d'un échange de code secret avec un émetteur des signaux ultrasonores.

12. Dispositif selon la revendication 11, dans lequel l'opération inclut en outre le chiffrement des données envoyées à l'émetteur à l'aide du code secret.

**Fig. 1**

Microphones

$\lambda = cT$

t ime or distance

1

2

3

**Fig. 2**

y

Speaker
(Device 1)
Tx=(x,y)

R1

R3

R2

A3

A1

A2

x

Rx1=(0,-D)

Rx2=(0,0)

Rx3=(0,D)

**Fig. 3**

Device 2

Angular Threshold

Device 1

Radial Threshold

# Fig. 4

**Fig. 5**

ROM 116

BIOS 120

RAM 118

OS 122

Application Programs 124

Program Data 126

Other Modules 128

Signal Processor and/or Microcontroller 130

Processor 102

Storage 106

Display Adapter 110

Display 132

Input Devices 108

Communication Interface 112

Display Interface for External Display 134

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0021203 A
- US 2014108780 A